# EUROPÄISCHE PATENTANMELDUNG

(11) **EP 3 739 469 A1**
(43) Veröffentlichungstag der Anmeldung: **18.11.2020**
(21) Anmeldenummer: 19175212.0
(22) Anmeldetag: 17.05.2019
(51) Int. Cl.: G06F 16/438, G06F 16/638

(54) **SYSTEM UND VERFAHREN FÜR DIE MUSIKWIEDERGABE IN EINEM GEBÄUDENETZWERK**

(71) Anmelder: GIRA GIERSIEPEN GmbH & Co. KG, 42477 Radevormwald (DE)
(72) Erfinder: Pees, Stefan, 51465 Bergisch Gladbach (DE)
(74) Vertreter: Angerhausen, Christoph

(57) **Zusammenfassung**

Die Erfindung betrifft ein System (1) und ein Verfahren für die Musikwiedergabe in einem Gebäudenetzwerk (2), wobei das Gebäudenetzwerk (2) einen Musikserver (3), auf dem mindestens eine Musikwiedergabeliste (4) hinterlegt ist oder über den auf eine auf einem externen Server hinterlegte Musikwiedergabeliste (4) zugegriffen werden kann, und mindestens ein vorzugsweise displayfreies Eingabegerät (5) aufweist, das über eine Datenverbindung (6) mit dem Musikserver (3) verbunden ist und über das die mindestens eine Musikwiedergabeliste (4) auswählbar, manipulierbar und/oder mindestens ein Musiktitel (7) der Musikwiedergabeliste (4) annotierbar ist.

## Beschreibung

Die Erfindung betrifft ein System und ein Verfahren für die Musikwiedergabe in einem Gebäudenetzwerk.

Die US 2017/0060519 A1 beschreibt ein Musikabspielgerät, welches Musikdaten aus einem Streaming-Dienst und unter Zuhilfenahme eines Musikvorschlagservices auswählt, wobei über eine Eingabevorrichtung durch Benutzereingaben eine Wiedergabeliste benutzerspezifisch manipuliert werden kann. Es werden weiterhin Sensoren für die Detektion eines oder mehrerer Mobilgeräte in einem Raum beschrieben, um auch bei mehreren Benutzern im Raum benutzerspezifische Eingaben an dem Eingabegerät zu ermöglichen. Ähnliche Vorrichtungen sind auch aus der WO 2016/109069 A1, der US 7,028,082 B1 und aus der EP 2 608 076 B1 bekannt.

Die bekannten Vorrichtungen haben den Nachteil, dass sie vergleichsweise aufwendig in der Realisierung und Implementierung sind. Dies liegt insbesondere daran, dass sie in der Regel einer mehr oder weniger umfangreichen Verdrahtung verschiedener Einzelgeräte bedürfen, die darüber hinaus in dem mit der Musikwiedergabe zu versorgenden Gebäude als zusätzliche Möbel untergebracht werden müssen und somit auch nicht immer ästhetischen Ansprüchen genügen oder, um dies zu erreichen, gestalterisch sehr aufwendig gehalten und damit im Gegenzug kostenintensiv sind.

Von daher ist es die Aufgabe der Erfindung, ein System der eingangs beschriebenen Art derart weiterzuentwickeln, dass es platzsparend und mit einfachen technischen Mitteln realisiert ist und es darüber hinaus ermöglicht, dass zumindest bei einer Ausführungsform keinerlei zusätzliche Möbel und andere Gegenstände in dem mit der Musikwiedergabe zu vorsorgenden Raum untergebracht werden müssen.

Diese Aufgabe wird durch ein System mit den Merkmalen des Anspruchs 1 gelöst. Der nebengeordnete Anspruch 10 betrifft ein entsprechendes Verfahren. Vorteilhafte Ausführungsformen der Erfindung sind Gegenstand der jeweils abhängigen Ansprüche.

Demgemäß ist bei einem System für die Musikwiedergabe in einem Gebäudenetzwerk vorgesehen, dass das Gebäudenetzwerk einen Musikserver, auf dem mindestens eine Musikwiedergabeliste hinterlegt ist oder über den auf eine auf einem externen Server, etwa einen Server eines Musik-Streaming-Dienstes, hinterlegte Musikwiedergabeliste zugegriffen werden kann, und mindestens ein vorzugsweise displayfreies Eingabegerät aufweist, das über eine Datenverbindung mit dem Musikserver verbunden ist und über das die mindestens eine Musikwiedergabeliste auswählbar, manipulierbar und/oder mindestens ein Musiktitel der Musikwiedergabeliste annotierbar ist.

Das erfindungsgemäße System kann vollständig in ein Gebäudenetzwerk integriert sein, beispielsweise in ein KNX-System für die Gebäudeautomatisierung. Das System ist jedoch nicht auf derartige Ausführungsformen begrenzt und es ist insbesondere auch denkbar, dass das System nur teilweise in das Gebäudenetzwerk integriert ist. Beispielsweise kann es zur Erzielung optimaler Klangergebnisse wünschenswert sein, dass in einem mit der Musikwiedergabe zu versorgenden Raum aufgestellte Lautsprecher, die primär nicht dem Gebäudenetzwerk, sondern einer separaten Musikanlage zugeordnet sind, von dem System für die Musikwiedergabe angesteuert werden, beispielsweise über eine Funkschnittstelle zwischen dem Lautsprecher und einem Medienkoppler des Gebäudenetzwerkes. Es ist jedoch insbesondere auch denkbar, dass die Lautsprecher für die Musikwiedergabe Bestandteil des Gebäudenetzwerkes sind, etwa in Form eines Unterputzradios das mindestens einen Lautsprecher aufweist.

So ist es beispielsweise realisierbar, dass sämtliche Komponenten des Systems für die Musikwiedergabe platzsparend im Gebäude verbaut und gegebenenfalls sogar außerhalb des mit der Musikwiedergabe zu versorgenden Raums angeordnet sind. Beispielsweise kann der Musikserver in einem zentralen Schaltschrank aufgenommen sein, der in einem Versorgungsraum des Gebäudes angeordnet ist. Ebenso können das Eingabegerät und/oder mindestens ein Lautsprecher für die Musikwiedergabe als Unterputz-Einbaugeräte realisiert sein und damit beispielsweise in einer Gebäudewand, in einen Gebäudeboden oder in einer Gebäudedecke integriert sein.

Im Gegensatz zu den aus dem Stand der Technik bekannten Systemen ist für die Bewertung und insbesondere die Speicherung dieser Bewertung (Metadaten) kein Smartphone und kein Computer, insbesondere kein stationärer oder mobiler Computer mit Bildschirm erforderlich. So kann das Eingabegerät auf einen Bildschirm, ein Display und auch auf jedwede andere optisch variable Anzeige verzichten. Beispielsweise kann das Eingabegerät als ein vorzugsweise drahtlos kommunizierendes Gerät mit physischen Tasten ausgebildet sein.

Das Eingabegerät muss nicht zwingend displayfrei sein, es kann beispielsweise eine graphische Mensch-Maschine-Schnittstelle (GUI) aufweisen, über die beispielsweise die Musikstimmung betreffende Metadaten erzeugt werden können.

Der Musikserver kann dazu eingerichtet sein, die Übertragung von Musikdaten entsprechend mindestens eines Musiktitels der Musikwiedergabeliste von einem außerhalb des Systems angeordneten Musik-Streaming-Dienst zu einer Tonausgabe des Systems, beispielsweise zu einem Lautsprecher, zu initiieren.

Der Musikserver kann beispielsweise cloudbasiert, also im Internet (WAN), oder auch in einem lokalen Netzwerk (LAN) bereitgestellt sein. Das erfindungsgemäße System kann für die Nutzung eines Streaming-Dienstes und somit die direkte Übertragung eines Musik-Streams an eine vernetzte Tonausgabe, etwa einen Lautsprecher des Systems eingerichtet sein. Ein Steuerungs-API kann dazu eingerichtet sein, um die Auswahl der Musikwiedergabeliste und die Wiedergabe eines Titels daraus zu steuern (lauter/leiser/play/pause/next/previous, etc.).

Das Eingabegerät kann einen Sensor, vorzugsweise einen Fingerprint-Sensor, für die Zuordnung einer Bedienung des Eingabegeräts zu einem Benutzer aufweisen.

Weiterhin kann es beispielsweise vorgesehen sein, dass das Eingabegerät für die Montage in einer Unterputz-Einbaudose oder für die Aufputz-Montage eingerichtet und über eine Busleitung oder ein Funkbussystem des Gebäudenetzwerkes mit dem Musikserver verbunden ist.

Das Eingabegerät kann mindestens einen Taster oder einen Tastsensor aufweisen, der für die Annotation des mindestens einen Musiktitels und/oder die Manipulation der mindestens einen Musikwiedergabeliste eingerichtet ist.

Das Eingabegerät kann mindestens einen Sensor aufweisen, der dazu eingerichtet ist, eine mit einer Musikwiedergabeliste verknüpfte benutzerspezifische Kennung von einem Datenträger, beispielsweise von einem Token oder einem RFID-Chip auszulesen.

Der Musikserver kann dazu eingerichtet sein, die über die benutzerspezifische Kennung verknüpfte Musikwiedergabeliste einem Musikabspielgerät des Gebäudenetzwerks für die Musikwiedergabe bereitzustellen. Das Eingabegerät kann ebenso dazu eingerichtet sein, den mindestens einen Musiktitel der mit der benutzerspezifischen Kennung verknüpften Musikwiedergabeliste entsprechend einer über das Eingabegerät erfolgten Benutzereingabe zu annotieren.

Das System kann dazu eingerichtet sein, über das Eingabegerät erzeugte Metadaten zu dem mindestens einen Musiktitel separat und unabhängig von einem jeweiligen Musik-Streaming-Server, beispielsweise auf dem Musikserver, zu speichern und zu verwalten, so dass die Metadaten unabhängig von einem bestimmten Musik-Streaming-Dienst bereitgestellt sind.

Das System kann weiterhin eine Musik-Analyse-Engine aufweisen, die dazu eingerichtet ist, unter Berücksichtigung einer erfolgten Annotation der Musikwiedergabeliste sowie von Metadaten des annotierten Musiktitels mindestens einen weiteren Musiktitel der Musikwiedergabeliste hinzuzufügen und/oder mindestens einen der Musiktitel aus der Musikwiedergabeliste zu entfernen.

Auf dem Musikserver kann ein Musikabspielgerät in Software implementiert sein, das dazu eingerichtet ist, Musikdaten entsprechend der Musiktitel der Musikwiedergabeliste aus einem Speicher des Musikservers oder IP-basiert von einem Musik-Streaming-Dienst zu beziehen und in ein entsprechendes Tonsignal umgewandelt an eine Tonausgabe, beispielsweise an einen Lautsprecher, zu übertragen. Alternativ kann vorgesehen sein, dass der Musikserver dazu eingerichtet ist, statt den Musik-Stream selbst zu empfangen, über eine Steuerungs-Schnittstelle eines vernetzten Lautsprechers mindestens einen Musiktitel aus der Musikwiedergabeliste auszuwählen und die Musikwiedergabe über den vernetzten Lautsprecher zu steuern.

Wenn das Eingabegerät für die Montage in einer Unterputz-Einbaudose eingerichtet ist, kann es einen Einbaurahmen sowie ein in dem Einbaurahmen wahlweise verriegelbares oder wiederauslösbares mobiles Bedienteil mit einer Funkschnittstelle aufweisen, über die das mobile Bedienteil über einen Bus-Ankoppler des Gebäudenetzwerkes mit dem Gebäudenetzwerk für die Datenübertragung gekoppelt ist.

Gemäß einem anderen Aspekt wird ein Verfahren für die Musikwiedergabe in einem Gebäudenetzwerk beschrieben, das die Schritte aufweist:
- Beziehen einer Musikwiedergabeliste von einem Musikserver des Gebäudenetzwerks und Abspielen mindestens eines Musiktitels der Musikwiedergabeliste;
- Annotieren des mindestens einen Musiktitels während der Musiktitel abgespielt wird zur Erzeugung mindestens eines annotierten Musiktitels in der Musikwiedergabeliste; und
- Hinzufügen und/oder Entfernen mindestens eines weiteren Musiktitels in die Musikwiedergabeliste beziehungsweise aus der Musikwiedergabeliste unter Berücksichtigung einer bei dem Annotieren erzeugten Annotation des mindestens einen annotierten Musiktitels.

Das Annotieren kann das einmalige Betätigen eines einzigen Tasters oder Tastsensors des Eingabegeräts aufweisen, dem auf einer Bedienfläche ein Qualifizierungsmerkmal zur Qualifizierung des abgespielten Musiktitels dynamisch zugewiesen wurde oder permanent zugewiesen ist. Das Qualifizierungsmerkmal kann beispielsweise ein aus den Taster oder den Tastsensor aufgedrucktes Symbol sein.

Das Verfahren kann weiterhin das Auslesen einer mit einer Musikwiedergabeliste verknüpften benutzerspezifischen Kennung von einem Datenträger, beispielsweise von einem Token oder einem RFID-Chip, und das Bereitstellen der über die benutzerspezifische Kennung verknüpften Musikwiedergabeliste einem Musikabspielgerät des Gebäudenetzwerks für die Musikwiedergabe aufweisen.

Unter Berücksichtigung einer erfolgten Annotation der Musikwiedergabeliste sowie von Metadaten des annotierten Musiktitels kann mindestens ein weiterer Musiktitel der Musikwiedergabeliste hinzugefügt und/oder mindestens einer der Musiktitel aus der Musikwiedergabeliste entfernt werden.

Musikdaten entsprechend der Musiktitel der Musikwiedergabeliste können aus einem Speicher des Musikservers oder IP-basiert von einem Musik-Streaming-Dienst bezogen werden, von einem Musikabspielgerät in ein Tonsignal umgewandelt und als Tonsignal an eine Tonausgabe, beispielsweise an einen Lautsprecher, übertragen werden.

Das Verfahren kann weiterhin die folgenden Schritte aufweisen:
- Entnehmen eines mobilen Bedienteils des Eingabegeräts aus einem Einbaurahmen des Eingabegeräts, der an oder in einer Unterputz-Dose oder auf Putz montiert ist;
- Annotieren des abgespielten Musiktitels durch einmaliges oder mehrmaliges Betätigen eines einzigen Tasters oder Tastsensors des mobilen Bedienteils;
- Übertragen einer bei dem Annotieren erzeugten Annotation über eine Funkschnittstelle des mobilen Bedienteils an einen Bus-Ankoppler des Einbaurahmens oder eines anderen Bestandteils des Gebäudenetzwerks, der in das Gebäudenetzwerk für die Datenübertragung integriert ist; und
- Zuordnen der Annotation dem aktuell abgespielten oder einem zuletzt abgespielten Musiktitel, wodurch eine Musikwiedergabeliste mit mindestens einem annotierten Musiktitel erhalten wird.

Die Musik-Analyse-Engine kann dazu eingerichtet sein, auf Basis von Metadaten die präferierte Musik eines Benutzers in der Musikwiedergabeliste zu analysieren. Die Metadaten der einzelnen Musiktitel können dazu benutzt werden, um neue Titel zur Erweiterung der Musikwiedergabeliste zu identifizieren und der Musikwiedergabeliste hinzuzufügen. Des Weiteren kann die Musik-Analyse-Engine dazu eingerichtet sein, die Annotation der Titel in der Musikwiedergabeliste zu analysieren und unerwünschte Musiktitel aus der Musikwiedergabeliste zu entfernen.

Es kann vorgesehen sein, dass die Musikwiedergabe durch ein Musik-Steuerungs-Gateway auf einem vernetzten Lautsprecher des Systems gesteuert wird. Dadurch kann eine Musikausgabe direkt von einem Streaming-Dienst auf den Lautsprecher übertragen werden.

Ein Musikabspielgerät des Gebäudenetzwerkes kann Musikdaten von einem Streaming-Dienst oder von einer lokalen Mediathek beziehen und dafür sorgen, dass eine Musikausgabe auf Basis der Musikwiedergabeliste an ein Musikwiedergabegerät, beispielsweise an einen Lautsprecher, weitergeleitet wird. Die Umwandlung der Musikdaten in ein Tonsignal kann durch das Musikabspielgerät erfolgen oder in ein Tonausgabegerät, etwa einen Lautsprecher, implementiert sein. Das Musikabspielgerät kann durch einen Benutzer über das Eingabegerät bedient werden. Das Musikabspielgerät kann in Software implementiert auf dem Musikserver des Gebäudenetzwerkes gehostet werden.

Das Eingabegerät kann dazu eingerichtet sein, Benutzereingaben entgegenzunehmen und eine Musikwiedergabe über das Musikabspielgerät des Gebäudenetzwerkes zu steuern. Wesentlicher Bestandteil der Bedienung können dabei Tasten- oder Tastsensoren (zum Beispiel "Like" und/oder "Dislike") zur Bewertung, das heißt zur Annotation, der Musiktitel durch den Benutzer sein. Das Eingabegerät kann beispielsweise als ein mobiles Bediengerät ausgebildet sein, welches in das Gebäudenetzwerk über eine drahtlose Funkverbindung integriert ist. Das Gebäudenetzwerk kann insbesondere ein Gebäudenetzwerk für die Gebäudeautomation sein, beispielsweise ein Netzwerk nach dem KNX-Standard.

Weitere Einzelheiten der Erfindung werden anhand der nachstehenden Figuren erläutert. Dabei zeigt:
- Figur 1: ein Blockschaltbild einer beispielhaften Ausführungsform eines erfindungsgemäßen Systems für die Musikwiedergabe in einem Gebäudenetzwerk; und
- Figur 2: eine beispielhafte Ausführungsform eines Eingabegeräts für die Verwendung in einem erfindungsgemäßen System.

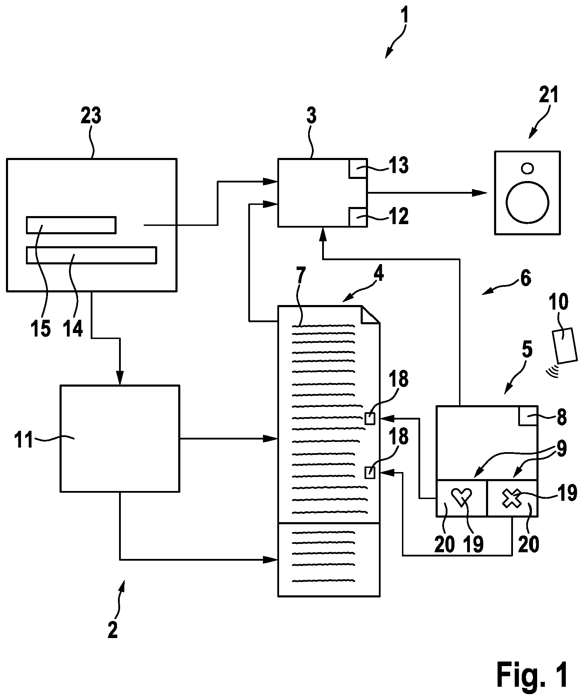

In Figur 1 ist das Blockschaltbild eines Systems 1 für die Musikwiedergabe in einem Gebäudenetzwerk 2 gemäß einer Ausführungsform der Erfindung gezeigt. Das Gebäudenetzwerk 2 weist einen Musikserver 3 auf, auf den mindestens eine Musikwiedergabeliste 4 und vorzugsweise eine Mehrzahl derartiger Wiedergabelisten 4 hinterlegt ist. Die Musikwiedergabelisten 4 weisen vorzugsweise eine eindeutige Kennung auf oder sind anderweitig voneinander unterscheidbar und beispielsweise über die Kennung oder ein anderes eindeutiges Merkmal einem bestimmten Benutzer zuzuordnen.

Das Gebäudenetzwerk 2 weist weiterhin ein Eingabegerät 5 auf, das über eine Datenverbindung 6 des Gebäudenetzwerks 2 mit dem Musikserver 3 verbunden ist. Über das Eingabegerät 5 ist mindestens eine der Musikwiedergabelisten 4 auswählbar, manipulierbar und/oder mindestens ein Musiktitel 7 einer ausgewählten Musikwiedergabeliste 4 annotierbar.

Für die Identifizierung eines Benutzers und damit die Selektion einer benutzerspezifischen Musikwiedergabeliste 4 aus einer Mehrzahl im Server 3 in einem Speicher 13 hinterlegter Wiedergabenlisten 4 ist ein Datenträger 10 vorgesehen, der beispielsweise ein Token oder einen RFID-Chip mit einer darauf hinterlegten eindeutigen Kennung ist. Über die auf dem Datenträger 10 hinterlegte Kennung ist eine bestimmte Musikwiedergabeliste 4 auf dem Server 3 identifizierbar.

Das Eingabegerät 5 weist einen Sensor 8 auf, mit Hilfe welches die auf dem Datenträger 10 hinterlegte benutzerspezifische Kennung auslesbar ist. Nach dem Einlesen der Kennung über das Eingabegerät 5 kann eine entsprechende Musikwiedergabeliste 4 aus dem Server 3 ausgewählt und an ein ebenfalls in dem Server implementiertes Musikabspielgerät 12 für die Musikwiedergabe bereitgestellt werden. Der Server 3 ist mit mindestens einer Tonausgabe 21, beispielsweise einem Lautsprecher, über das Gebäudenetzwerk 2 verbunden.

Während ein Musiktitel 7 aus der Liste 4 abgespielt wird, kann ein Benutzer über das Eingabegerät 5 eine Qualifizierung des abgespielten Titels vornehmen, wodurch eine Annotation 18 des abgespielten Musiktitels 7 erzeugt und in der Musikwiedergabeliste 4 oder in dem Speicher 13 des Servers 3 dem annotierten Musiktitel 7 zugeordnet hinterlegt wird. Zur Durchführung der Qualifizierung des Titels 7, welche zur Erzeugung der Annotation 18 führt, weist das Eingabegerät 5 im vorliegenden Fall zwei Taster oder Tastsensoren 9 auf, denen auf einer Bedienfläche 20 jeweils ein Qualifizierungsmerkmal 19 zur Qualifizierung des abgespielten Musiktitels 7 dynamisch oder permanent zugewiesen ist. Die Qualifizierungsmerkmale 19 können beispielsweise aus dem Stand der Technik bekannte "Like-" und "Dislike"-Symbole sein, beispielsweise ein Herzsymbol und ein Kreuzsymbol.

Das Gebäudenetzwerk 2 weist weiterhin eine Musik-Analyse-Engine 11 auf, die auf dem Musikserver 3 implementiert oder IP-basiert außerhalb des Gebäudenetzwerkes 2 realisiert und mit dem Gebäudenetzwerk 2 gekoppelt sein kann. Die Musik-Analyse-Engine 11 ist dazu eingerichtet, unter Berücksichtigung der Annotationen 18 der Musikwiedergabeliste 4 sowie von Metadaten 14 der annotierten Musiktitel 7 mindestens einen weiteren Musiktitel 7 der Musikwiedergabeliste 4 hinzuzufügen oder mindestens einen der Musiktitel 7 aus der Musikwiedergabeliste 4 zu entfernen. Die Metadaten 14 können beispielsweise von einem Musik-Streaming-Dienst 23 IP-basiert bezogen werden. Der Musik-Streaming-Dienst 23 kann auch als Musikdatenquelle für den Musikserver 3 dienen, wenn die Musikdaten 15 nicht in einer eigenen Mediathek des Servers 3, beispielsweise auf dessen Speicher 13 hinterlegt sind.

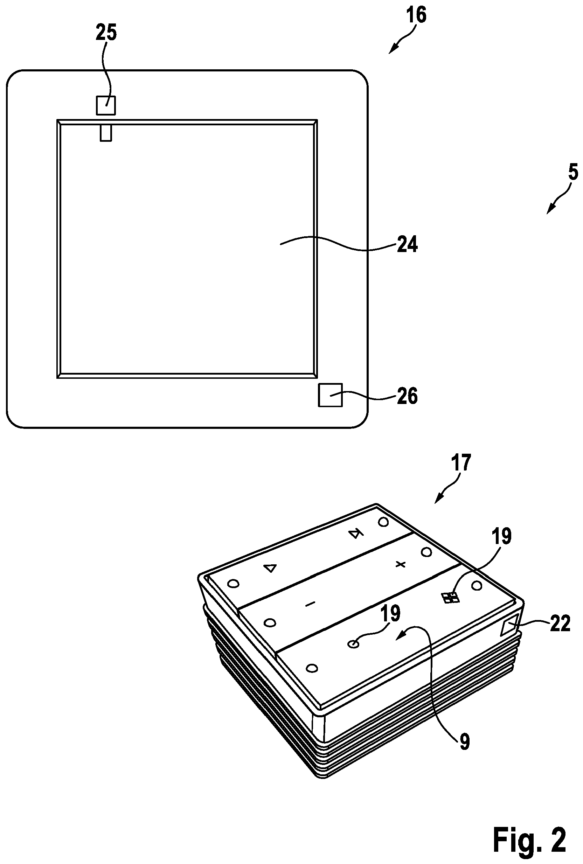

Die Figur 2 zeigt eine beispielhafte Ausführungsform eines Eingabegeräts 5, welches im Wesentlichen aus einem Einbaurahmen 16 und einem mobilen Bedienteil 17 besteht. Das Eingabegeräts 5 kann in dem System nach Figur 1 verwendet werden. Der Einbaurahmen 16 weist eine zentrale Rastaufnahme 24 auf, die im vorliegenden Fall quadratisch ausgebildet ist und beispielsweise eine Kantenlänge von 55 mm aufweisen kann. In der Rastaufnahme 24 kann das mobile Bedienteil 17 wahlweise aufgenommen und aus dieser wieder entnommen werden, je nachdem ob ein Benutzer das Bedienteil 17 mit sich führen oder platzsparend in dem Einbaurahmen beispielsweise an der Wand eines Gebäudes verstauen möchte.

Das Bedienteil 17 kann eine Funkschnittstelle 22 aufweisen, über welche das mobile Bedienteil 17 an einen Bus-Ankoppler 26 des Einbaurahmens 16 oder alternativ eines anderen Bestandteils des Gebäudenetzwerks 2 (siehe Figur 1) für die Datenübertragung gekoppelt ist, so dass auch bei aus dem Rahmen 16 entnommenen Bedienteil 17 mit Hilfe der Tastsensoren 9 getätigte Bedieneingaben und insbesondere Annotationen an das Gebäudenetzwerk 2 übertragen werden können.

Der Rahmen 16 weist ein Ver- und Entriegelungselement 25 auf, mit Hilfe welches das mobile Bedienteil 17 wahlweise in der Rastaufnahme 24 des Rahmens 16 festlegbar und daraus wieder auslösbar ist.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 1: System
- 2: Gebäudenetzwerk
- 3: Musikserver
- 4: Musikwiedergabeliste
- 5: Eingabegerät
- 6: Datenverbindung
- 7: Musiktitel
- 8: Sensor
- 9: Taster oder Tastsensor
- 10: Datenträger
- 11: Musik-Analyse-Engine
- 12: Musikabspielgerät
- 13: Speicher
- 14: Metadaten
- 15: Musikdaten
- 16: Einbaurahmen
- 17: mobiles Bedienteil
- 18: Annotation
- 19: Qualifizierungsmerkmal
- 20: Bedienfläche
- 21: Tonausgabe
- 22: Funkschnittstelle
- 23: Musik-Streaming-Dienst
- 24: Rastaufnahme
- 25: Ver- und Entriegelungselement
- 26: Bus-Ankoppler

## Patentansprüche

1. System (1) für die Musikwiedergabe in einem Gebäudenetzwerk (2), wobei das Gebäudenetzwerk (2) einen Musikserver (3), auf dem mindestens eine Musikwiedergabeliste (4) hinterlegt ist oder über den auf eine auf einem externen Server, etwa eines Musik-Streaming-Dienstes (23), hinterlegte Musikwiedergabeliste (4) zugegriffen werden kann, und mindestens ein vorzugsweise displayfreies Eingabegerät (5) aufweist, das über eine Datenverbindung (6) mit dem Musikserver (3) verbunden ist und über das die mindestens eine Musikwiedergabeliste (4) auswählbar, manipulierbar und/oder mindestens ein Musiktitel (7) der Musikwiedergabeliste (4) annotierbar ist.

2. System (1) nach Anspruch 1, bei dem der Musikserver (3) dazu eingerichtet ist, die Übertragung von Musikdaten entsprechend mindestens eines Musiktitels (7) der Musikwiedergabeliste (4) von einem außerhalb des Systems (1) angeordneten Musik-Streaming-Dienst (23) zu einer Tonausgabe (21) des Systems (1), beispielsweise zu einem Lautsprecher, zu initiieren.

3. System (1) nach Anspruch 1 oder 2, bei dem das Eingabegerät (5) für die Montage in einer Unterputz-Einbaudose oder für die Aufputz-Montage eingerichtet und über eine Busleitung oder ein Funkbussystem des Gebäudenetzwerks (2) mit dem Musikserver (3) verbunden ist.

4. System (1) nach einem der vorangegangenen Ansprüche, bei dem das Eingabegerät (5) mindestens einen Taster oder Tastsensor (9) aufweist, der für die Annotation (18) des mindestens einen Musiktitels (7) und/oder die Manipulation der mindestens einen Musikwiedergabeliste (4) eingerichtet ist.

5. System (1) nach einem der vorangegangenen Ansprüche, bei dem das Eingabegerät (5) mindestens einen Sensor (8) aufweist, der dazu eingerichtet ist, eine mit einer Musikwiedergabeliste (4) verknüpfte benutzerspezifische Kennung von einem Datenträger (10), beispielsweise von einem Token oder einem RFID-Chip, auszulesen.

6. System (1) nach Anspruch 5, bei dem der Musikserver (3) dazu eingerichtet ist, die über die benutzerspezifische Kennung verknüpfte Musikwiedergabeliste (4) einem Musikabspielgerät (12) des Gebäudenetzwerks (2) für die Musikwiedergabe bereitzustellen.

7. System (1) nach Anspruch 1, bei dem das Eingabegerät (5) einen Sensor, vorzugsweise einen Fingerprint-Sensor, für die Zuordnung einer Bedienung des Eingabegeräts (5) zu einem Benutzer aufweist.

8. System (1) nach Anspruch 6 oder 7, bei dem das Eingabegerät (5) dazu eingerichtet ist, den mindestens einen Musiktitel (7) der mit der benutzerspezifischen Kennung verknüpften Musikwiedergabeliste (4) entsprechend einer über das Eingabegerät (5) erfolgten Benutzereingabe zu annotieren.

9. System (1) nach Anspruch 1, das dazu eingerichtet ist, über das Eingabegerät erzeugte Metadaten zu dem mindestens einen Musiktitel (7) separat und unabhängig von einem jeweiligen Musik-Streaming-Server zu speichern und zu verwalten, so dass die Metadaten unabhängig von einem bestimmten Musik-Streaming-Dienst bereitgestellt sind.

10. System (1) nach einem der vorangegangenen Ansprüche, die weiterhin eine Musik-Analyse-Engine (11) aufweist, die dazu eingerichtet ist, unter Berücksichtigung einer erfolgten Annotation (18) der Musikwiedergabeliste (4) sowie von Metadaten (14) des annotierten Musiktitels (7) mindestens einen weiteren Musiktitel (7) der Musikwiedergabeliste (4) hinzuzufügen und/oder mindestens einen der Musiktitel (7) aus der Musikwiedergabeliste (4) zu entfernen.

11. System (1) nach einem der vorangegangenen Ansprüche, bei dem auf dem Musikserver (3) ein Musikabspielgerät (12) in Software implementiert ist, das dazu eingerichtet ist, Musikdaten (15) entsprechend der Musiktitel (7) der Musikwiedergabeliste (4) aus einem Speicher (13) des Musikservers (3) oder IP-basiert von einem Musik-Streaming-Dienst (23) zu beziehen und in ein entsprechendes Tonsignal umgewandelt an eine Tonausgabe (21), beispielsweise an einen Lautsprecher, zu übertragen.

12. System (1) nach einem der vorangegangenen Ansprüche, bei dem das Eingabegerät (5) für die Montage in einer Unterputz-Einbaudose eingerichtet ist und einen Einbaurahmen (16) sowie ein in dem Einbaurahmen (16) wahlweise verriegelbares und wieder auslösbares mobiles Bedienteil (17) mit einer Funkschnittstelle (22) aufweist, über die das mobile Bedienteil (17) über einen Bus-Ankoppler des Gebäudenetzwerks (2) mit dem Gebäudenetzwerk (2) für die Datenübertragung gekoppelt ist.

13. Verfahren für die Musikwiedergabe in einem Gebäudenetzwerk (2) unter Verwendung eines System (1) nach einem der vorangegangenen Ansprüche, wobei das Verfahren die Schritte aufweist:
- Beziehen einer Musikwiedergabeliste (4) von einem Musikserver (3) des Gebäudenetzwerks (2) und Abspielen mindestens eines Musiktitels (7) der Musikwiedergabeliste (4);
- Annotieren des mindestens einen Musiktitels (7) während der Musiktitel (7) abgespielt wird zur Erzeugung mindestens eines annotierten Musiktitels (7) in der Musikwiedergabeliste (4); und
- Hinzufügen und/oder Entfernen mindestens eines weiteren Musiktitels (7) in die Musikwiedergabeliste (4) bzw. aus der Musikwiedergabeliste (4) unter Berücksichtigung einer bei dem Annotieren erzeugten Annotation (18) des mindestens einen annotierten Musiktitels (7).

14. Verfahren nach Anspruch 13, bei dem das Annotieren das einmalige Betätigen eines einzigen Tasters oder Tastsensors (9) des Eingabegeräts (5) aufweist, dem auf einer Bedienfläche (20) ein Qualifizierungsmerkmal (19) zur Qualifizierung des abgespielten Musiktitels (7) dynamisch zugewiesen wurde oder permanent zugewiesen ist.

15. Verfahren nach einem der Ansprüche 13 oder 14, das das Initiieren einer Übertragung von Musikdaten entsprechend mindestens eines Musiktitels (7) der Musikwiedergabeliste (4) von einem außerhalb des Systems (1) angeordneten Musik-Streaming-Dienst (23) zu einer Tonausgabe (21) des Systems (1), beispielsweise zu einem Lautsprecher, aufweist.

16. Verfahren nach einem der Ansprüche 13 bis 15, bei dem unter Berücksichtigung einer erfolgten Annotation (18) der Musikwiedergabeliste (4) sowie von Metadaten des annotierten Musiktitels (7) mindestens ein weiterer Musiktitel (7) der Musikwiedergabeliste (4) hinzugefügt und/oder mindestens einer der Musiktitel (7) aus der Musikwiedergabeliste (4) entfernt wird.

17. Verfahren nach einem der Ansprüche 13 bis 16, bei dem Musikdaten (15) entsprechend der Musiktitel (7) der Musikwiedergabeliste (4) aus einem Speicher des Musikservers (3) oder IP-basiert von einem Musik-Streaming-Dienst (23) bezogen, von einem Musikabspielgerät (12) in ein Tonsignal umgewandelt und als das Tonsignal an eine Tonausgabe (21), beispielsweise an einen Lautsprecher, übertragen werden.

18. Verfahren nach einem der Ansprüche 13 bis 17, das die folgenden Schritte aufweist:
- Entnehmen eines mobilen Bedienteils (17) des Eingabegeräts (5) aus einem Einbaurahmen (16) des Eingabegeräts (5), der an oder in einer Unterputz-Dose oder Aufputz montiert ist;
- Annotieren des abgespielten Musiktitels (7) durch einmaliges oder mehrmaliges Betätigen eines einzigen Tasters oder Tastsensors (9) des mobilen Bedienteils (17);
- Übertragen einer bei dem Annotieren erzeugten Annotation (18) über eine Funkschnittstelle (22) des mobilen Bedienteils (17) an einen Bus-Ankoppler (26) des Einbaurahmens (16) oder eines anderen Bestandteil des Gebäudenetzwerks (2), mit dem das Gebäudenetzwerk (2) für die Datenübertragung gekoppelt ist; und
- Zuordnen der Annotation (18) dem aktuell abgespielten oder einem zuletzt abgespielten Musiktitel (7), wodurch eine Musikwiedergabeliste (4) mit mindestens einem annotierten Musiktitel (7) erhalten wird.
